(19) Europäisches Patentamt
European Patent Office
Office européen des brevets

(11) **EP 2 437 098 A1**

(12) **EUROPÄISCHE PATENTANMELDUNG**

(43) Veröffentlichungstag:
**04.04.2012 Patentblatt 2012/14**

(51) Int Cl.:
***G02B 27/22*** *(2006.01)*      ***H04N 13/00*** *(2006.01)*

(21) Anmeldenummer: **10189382.4**

(22) Anmeldetag: **29.10.2010**

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**

(30) Priorität: **01.10.2010 DE 102010041893**

(71) Anmelder: **3D Impact Media
6061 Sarnen (CH)**

(72) Erfinder: **Fendt, Stefan Manfred
44575 Castrop-Rauxel (DE)**

(74) Vertreter: **Patentanwälte
Westphal, Mussgnug & Partner
Herzog-Wilhelm-Strasse 26
80331 München (DE)**

(54) **AUTOSTEREOSKOPISCHE DISPLAYANORDNUNG**

(57)      Beschrieben ist eine Displayanordnung mit einem optischen Barrierefilter (100) und einem Panel (10), die beabstandet zueinander angeordnet sind;
wobei das Panel (10) eine Vielzahl von Subpixeln (30) aufweist, die in einem Raster (50) mit einer ersten und einer zweiten Richtungsachse (11, 12) angeordnet sind;
wobei das Barrierefilter (100) ein periodisches Streifenmuster (70) mit einer Vielzahl von relativ zu der ersten Richtungsachse (11) des Panels (10) um einen Kippwinkel gekippten und zueinander beabstandeten Streifen (70) aufweist;
wobei der Kippwinkel gegeben ist durch:

$$\sigma = \arctan\left( \frac{x_{SPEL}}{y_{SPEL}} \cdot v \right)$$

wobei
$\sigma$ den Kippwinkel,
$v$ einen Skalierungsfaktor,
$y_{SPEL}$ eine Ausdehnung eines Subpixels (30) in der ersten Richtungsachse, und
$x_{SPEL}$ eine Ausdehnung eines Subpixels (30) in der zweiten Richtungsachse
bezeichnet; undwobei der Skalierungsfaktor $v$ kleiner oder gleich 0,7 ist.

DISPLAYANORDNUNG

Panel 10

Abstand f

Barrierefilter 100

BETRACHTER
60

Abstand f'

***Fig. 2***

EP 2 437 098 A1

**Beschreibung**

Die Erfindung betrifft eine Displayanordnung zur räumlichen Darstellung ohne Hilfsmittel für einen oder mehrere Betrachter, d.h. eine Displayanordnung zur autostereoskopischen Visualisierung.

Die GB 190418672 A beschreibt ein System mit einem "Linienschirm" zur 3D-Darstellung. Weiterhin sind in der Schrift von Sam H. Kaplan "Theory of Parallax Barriers", of SMPTI vol. 59, No. 7, pp 11 - 21, July 1952, grundlegende Erkenntnisse zur Verwendung von Barriereschirmen (Barrierefiltern) für die 3D-Darstellung beschrieben.

Lange Zeit gelang jedoch keine umfassende Verbreitung von autostereoskopischen Systemen. Erst in den achtziger Jahren des 20. Jahrhunderts konnte aufgrund der nunmehr zur Verfügung stehenden Rechenleistung und aufgrund von neuartigen Displaytechnologien eine Renaissance der 3D-Systeme einsetzen. In der JP 8-331605 AA ist eine Stufenbarriere, bei der ein transparentes Barriereelement in etwa die Abmessungen eines Subpixels aufweist, beschrieben. Mit dieser Technik ist es möglich, den bei den meisten autostereoskopischen Systemen aufgrund der Darstellung gleichzeitig mehrerer Ansichten (mindestens zwei, bevorzugt aber mehr als zwei) auftretenden Auflösungsverluste in der horizontalen Richtung teilweise auch auf die vertikale Richtung umzulegen. Nachteilig ist hier, wie bei allen Barriereverfahren, der hohe Lichtverlust. Außerdem verändert sich der Stereokontrast bei seitlicher Bewegung des Betrachters von nahezu 100% auf etwa 50% und dann wieder ansteigend auf 100%, was eine im Betrachtungsraum schwankende 3D-Bildqualität zur Folge hat. Eine in der Helligkeit verbesserte Barrieretechnologie ist in der WO 2004/077839 A1 beschrieben. Basierend auf dem Ansatz einer Stufenbarriere wird hier ein spezielles Tastverhältnis (bzw. Filterpitch) von opaken Streifen zur Filterapertur (auch Spalten oder Freiräume) vorgestellt. Die in dieser Schrift offenbarten Ausgestaltungen und Lehren erzeugen jedoch in aller Regel unangenehme Moiré-Effekte und/oder eine stark eingeschränkte Tiefenwahrnehmung, da der Stereokontrast stark herabgesetzt wird. Es sind außerdem klassische 8x8-Filter bekannt, die aber bei Unterabtastung ebenfalls Moiré-Muster hervorrufen.

Der Moiré-Effekt tritt auf durch die Überlagerung regelmäßiger Raster, wie sie in autostereoskopischen Displays aufgrund der Unterteilung in Pixel (Bildzellen) im Zusammenspiel mit optischen Barrierefiltern vorkommen, und äußert sich durch zusätzliche, scheinbar grobe Raster, die vom Betrachter als unangenehm empfunden werden können. Insbesondere in der Display-Technologie unterscheidet man bei den Moiré-Effekten zwischen dem so genannten Farbbeat-Moiré und dem so genannten Blackbeat-Moiré. Letzterer entsteht aufgrund einer Schwarzmaske, in der Pixel bzw. Subpixel eingefasst sind, durch Unterabtastung. Der Farbbeat oder Farbbeat-Moiré hingegen kann beispielsweise durch Überlagerung benachbarter Bilder oder Ansichten (Views) entstehen.

Es ist Aufgabe der vorliegenden Erfindung eine Displayanordnung zur autostereoskopischen Visualisierung mit einem optischen Barrierefilter zur Verfügung zu stellen die bei guter Lichtausbeute möglichst geringe Aliasingeffekte, insbesondere ein geringes Moiré-Verhalten, zeigen.

Diese Aufgabe wird gelöst durch eine Displayanordnung gemäß dem unabhängigen Patentanspruchs 1. Ausgestaltungen der erfindungsgemäßen Displayanordnung und Weiterbildungen sind Gegenstand von Unteransprüchen.

Ein Ausführungsbeispiel betrifft eine Displayanordnung mit einem optischen Barrierefilter und einem Panel, die zueinander beabstandet angeordnet sind, zur Verfügung gestellt. Das Panel weist eine Vielzahl von Subpixeln auf, die in einem Raster mit einer ersten und einer zweiten Richtungsachse angeordnet sind, und das Barrierefilter weist ein periodisches Streifenmuster mit einer Vielzahl von relativ zu der ersten Richtungsachse des Panels um einen Kippwinkel gekippten und zueinander beabstandeten Streifen auf. Der Kippwinkel ist hierbei gegeben durch:

$$\sigma = a\tan\left(\frac{x_{spel}}{y_{spel}} \cdot v\right)$$

wobei $\sigma$ den Kippwinkel, $v$ einen Skalierungsfaktor, $Y_{spel}$ eine Ausdehnung eines Subpixels in der ersten Richtungsachse, und $X_{spel}$ eine Ausdehnung eines Subpixels in der zweiten Richtungsachse bezeichnet. Der Skalierungsfaktor $v$ is kleiner oder gleich 0,7 oder kleiner oder gleich 0,5.

Ausführungsbeispiele der vorliegenden Erfindung werden nachfolgend anhand von Figuren näher erläutert.

Figur 1    zeigt einen Ausschnitt eines Panels einer Displayanordnung mit einer Vielzahl von in einem Raster angeordneten Subpixeln;

Figur 2    veranschaulicht ein Beispiel der erfindungsgemäßen Displayanordnung schematisch in einer Draufsicht;

Figur 3    veranschaulicht schematisch ein Beispiel der Displayanordnung aus Sicht eines Betrachters;

Figur 4    veranschaulicht schematisch den prinzipiellen Aufbau eines Beispiels eines optischen Barrierefilters;

Figur 5    zeigt eine schematische Darstellung eines Subpixel;

Figur 6 veranschaulicht die strahlgeometrischen Verhältnisse in der Displayanordnung zur Bestimmung des Abstandes f von einer Paneloberfläche;

Figur 7 veranschaulicht die strahlgeometrischen Verhältnisse in der Displayanordnung zur Bestimmung der Filterpitch.

In den Figuren wird exemplarisch ein Ausführungsbeispiel der vorliegenden Erfindung beschrieben. Das in den Figuren erläuterte Konzept ist selbstverständlich auf beliebige weitere Ausführungsbeispiele anwendbar.

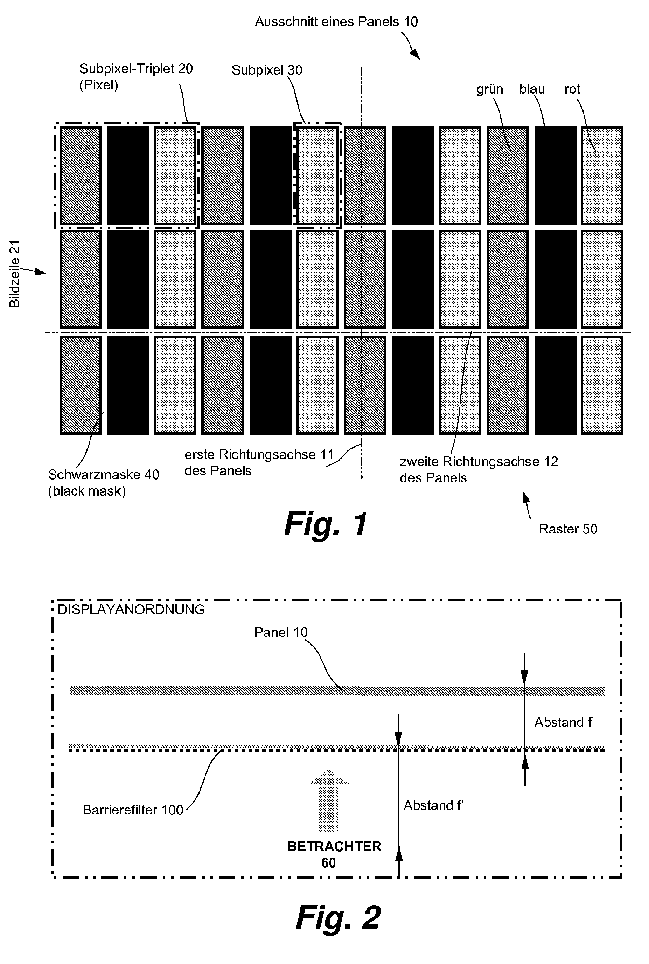

Figur 1 zeigt schematisch einen Ausschnitt eines Panels 10, insbesondere eines Panels für eine autostereoskopische Darstellung. Dieses Panel 10 umfasst eine Vielzahl von Pixeln (Bildzellen), wobei ein Pixel ein rotes, ein blaues und ein grünes Subpixel oder Farbsubpixel aufweisen kann. Deshalb wird für ein Pixel in der einschlägigen Literatur häufig auch der Begriff Subpixel-Triplet 20 verwendet. Die Subpixel 30 können in Subpixelclustern mit einer variablen Anzahl $n_{SUPEL}$ an Subpixeln 30 angeordnet sein. Außerdem können die Subpixel in einer Maske oder Schwarzmaske 40 (engl. black mask) strukturiert und in einem Raster 50 angeordnet sein. Das Raster 50 umfasst eine erste Richtungsachse 11, die nachfolgend auch als vertikale Richtungsachse bezeichnet wird, und eine zweite Richtungsachse 12, die nachfolgend auch als horizontale Richtungsachse bezeichnet wird. Die Pixel und Subpixel sind insbesondere zeilenweise (in Bildzeilen 21) oder spaltenweise in dem Raster 50 angeordnet. Zeilen verlaufen hierbei in der horizontalen und Spalten verlaufen in der vertikalen Richtungsachse.

In Figur 1 ist beispielhaft die Subpixelstruktur eines gebräuchlichen TFT- bzw. Plasmapanels dargestellt. Üblicherweise bilden jeweils drei Subpixel ein quadratisches Rot-Grün-Blau- oder Blau-Grün-Rot-Subpixel-Triplet, wobei sich die Farbbezeichnug auf die farbliche Anordnung der einzelnen Subpixel 30 bezieht. Ein erfindungsgemäßes stereoskopisches Display kann auch ein Panel 10, das eine beliebige andersartige Technologie verwendet, enthalten. Die vorliegende Erfindung beschränkt sich nicht auf Displayanordnungen mit einem TFT- oder Plasmapanels.

Figur 2 zeigt in Draufsicht ein Panel 10 mit einer in Figur 1 beschriebenen Subpixelanordnung und mit einem Barrierefilter 100, das beabstandet und parallel zu dem Panel 10 angeordnet ist. Der Buchstabe f bezeichnet in Figur 2 den Abstand zwischen dem Panel und dem Barrierefilter. Die Position eines Betrachters, der sich vor dem Barrierefilter befinden kann, ist in Figur 2 durch das Bezugszeichen 60 bezeichnet. Der Buchstabe f' bezeichnet hierbei den Abstand des Betrachters 60 zu dem Barrierefilter 100.

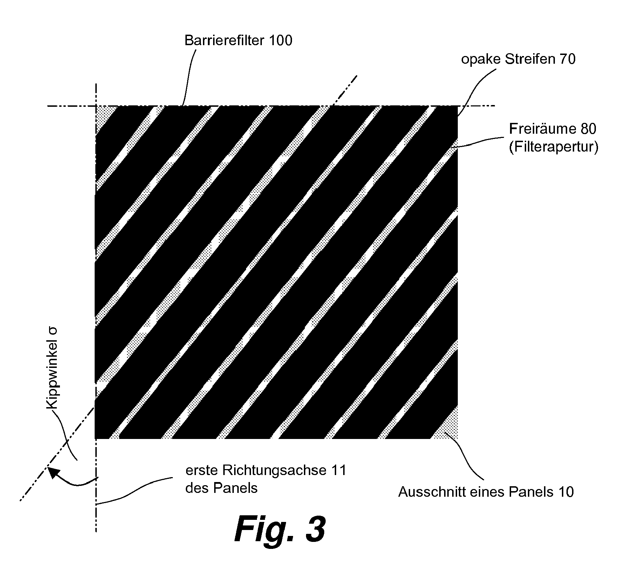

Figur 3 zeigt schematisch eine Vorderansicht der Displayanordnung, d.h. eine Ansicht aus der Sicht des Betrachters 60. In dieser Ansicht ist das Barrierefilter 100 vor dem Panel 10 angeordnet. Das Barrierefilter 100 weist ein Streifenmuster mit mehreren parallel zueinander verlaufenden optisch durchlässigen Streifen 80 auf. Diese durchlässigen Streifen sind durch optisch undurchlässige (opake) Streifen 70 voneinander getrennt. Die Streifen des Streifenmuster sind geneigt gegenüber der ersten Richtungsachse 11 des Panels 10 angeordnet ist. Ein Kippwinkel zwischen einer Längsrichtung der Streifen und der ersten Richtungsachse 11 ist in Figur 2 mit σ bezeichnet. Ein in Figur 2 im Bereich der durchlässigen Streifen dargestelltes Muster repräsentiert eine Darstellung auf dem Panel.

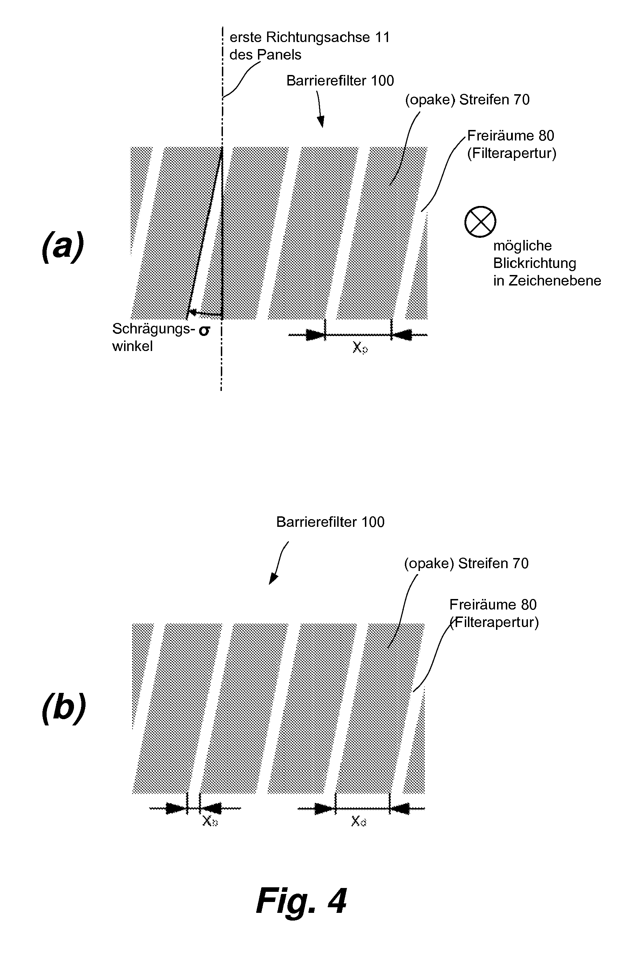

Figur 4 zeigt im Detail einen Ausschnitt eines Barrierefilters 100 gemäß Figur 2 oder 3. Das Barrierefilter 100 ist periodisch aufgebaut und umfasst opake bzw. nicht transparente Bereichen mit einer horizontalen Breite $X_d$, die durch die Streifen 70 repräsentiert sind, und transparente Bereiche mit einer horizontalen Breite $x_b$, wobei die transparenten Bereiche die Freiräume 80 zwischen den Streifen 70 sind, die auch als Filterapertur bezeichnet werden. Die Summe aus der horizontalen Breite $x_p$ eines undurchlässigen Streifens und der horizontalen Breite $x_d$ eines durchlässigen Streifens wird als Filterperiode $x_p$ oder Filterpitch bezeichnet. Das Barrierefilter 100 sorgt für den Betrachter optisch für eine Abtastung eines dahinter liegenden, auf dem Panel 10 dargestellten Bildes mit einer Frequenz

$$f_{Filter} = \frac{1}{x_P} ,$$

die sich aus dem Kehrwert der Filterperiode $x_p$ (Filterpitch) berechnet. Da hierbei unvermeidbar Aliasingeffekte auftreten, was sich in einem für den Betrachter mehr oder weniger stark wahrnehmbaren Moiré-Muster äußert, ist eine Kippung des Filters um den Kippwinkel σ sinnvoll, um das Aliasing soweit wie möglich zu unterdrücken oder zumindest in für das menschliche Auge nicht wahrnehmbare Frequenzbereiche zu verschieben. Der Kippwinkel (Schrägungswinkel) σ ist hier definiert als der Winkel, um den die Längsrichtung der Streifen 70, 80 relativ zur ersten Richtungsachse 11 des Rasters 50 geneigt, verdreht oder gekippt sind.

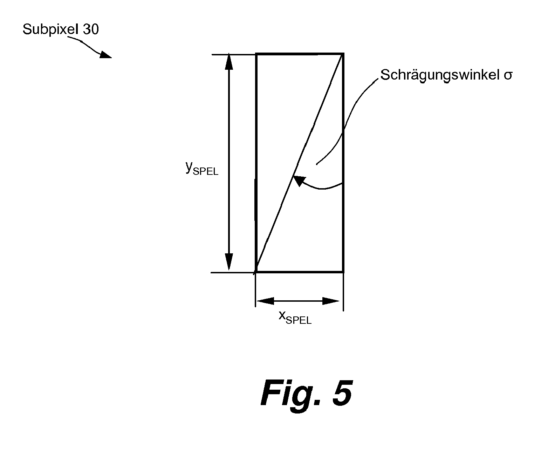

Figur 5 veranschaulicht ein Subpixel 30, das sich vertikal über eine Distanz $Y_{spel}$ ausdehnt und das sich horizontal über die Distanz $x_{spel}$ erstreckt. Ein nomineller Kippwinkel $\sigma_n$, um den die Streifen 70 des Barrierefilters 100 relativ zur ersten Richtungsachse 11 des Panels geneigt sind berechnet sich zu

$$\sigma_n = \arctan\left(\frac{x_{spel}}{y_{spel}}\right)$$

Der nominelle Kippwinkel ist ausschließlich durch die in Figur 5 gezeigte Geometrie eines Subpixels bestimmt.

Aufgrund der erwähnten Aliasing-Effekte, die bei Unterabtastung, also bei einer zu geringen Filterfrequenz $f_{Fliter}$ auftreten (gemäß dem Nyquist-Theorem), und der damit einhergehenden Moiré-Muster ist dieser Kippwinkel sinnvoll. Insbesondere bei ungekippten Barrierefiltern ist der Moiré-Effekt aufgrund von Aliasing sehr stark störend wahrnehmbar. In erster Näherung kann dieses Aliasing dadurch unterdrückt werden, dass man den Filter in einer Weise kippt, dass ein Gangunterschied von einem Subpixel pro Pixelzeile des Panels entsteht, wobei als Gangunterschied die Wegdifferenz von zwei kohärenten Wellen (ausgehend von einem Auge des Betrachters) verstanden werden kann.

Eine bessere Aliasingunterdrückung als durch Schrägung gemäß dem nominellen Kippwinkel $\sigma_n$ lässt sich erzielen, wenn der Filter gegenüber diesem nominellen Kippwinkel etwas "verstimmt" wird. Diese Verstimmung des nominellen Kippwinkels $\sigma_n$ zu einem Kippwinkel $\sigma$ erfolgt über einen empirischen Skalierungsfaktor v. Der (verstimmte) Kippwinkel $\sigma$ ist damit gegeben durch

$$\sigma = a\tan\left(\frac{x_{spel}}{y_{spel}} \cdot v\right),$$

wobei hier v der Skalierungsfaktor ist, der den Gangunterschied gegenüber dem Gangunterschied, der allein durch den nominellen Kippwinkel $\sigma_n$ entsteht, moduliert.

Ein Skalierungsfaktor v=1 führt zu einem Phasenunterschied der Moiré-Muster von Bildzeile 21 zu Bildzeile von einem Subpixel, bzw. von einem mittleren Subpixel x. Das klassische 8x8-Filter ist ein nach diesem Kriterium ausgelegtes Filter. Ein Farb-Moiré ist im optimalen Betrachtabstand f' nicht erkennbar, da die entstehende Moiré-Struktur zu hoch aufgelöst ist und sich somit über mehrere Bildzeilen gemittelt "nullt". Allerdings zeigt jenes Filter ein starkes "Blackbeat". Ein Blackbeat ist wie eingangs beschrieben ein Moire, das aus deutlich sichtbaren periodischen schwarzen Streifen besteht. Da die einzige schwarze Struktur des Panels eine Schwarzmaske 40 (engl. black mask) ist, kann dieses Moiré-Muster ausschließlich durch Unterabtastung der Schwarzmaske 40 entstehen.

Wendet man die Prinzipien, die bei einem klassischen 8x8-Filter Farb-Moirés unterdrücken (prinzipiell also der Phasenunterschied von einem Bildelement), auf die Schwarzmaske 40 und somit das Blackbeat-Moiré an, so resultiert daraus, dass der Phasenunterschied für jede Bildzeile ein halbes Subpixel 30 groß sein muss. Zusätzlich lässt sich somit auch das Farb-Moire (der Blackbeat) unterdrücken, die Mittelung funktioniert dann jedoch nicht mehr über zwei benachbarte Zeilen, sondern über jede zweite Zeile. Für den Skalierungsfaktor v resultiert somit

$$v = n + 0,5,$$

wobei n eine natürliche Zahl ist.

Die horizontale Spaltgröße $x_b$, wie sie z.B. in Figur 3 oder 4 durch die Freiräume 80 repräsentiert ist, wird gemeinhin auch als Apertur eines Filterelements bezeichnet und sollte so gewählt werden, dass der Filter mindestens ein Subpixel 30 inklusive der zu dem Subpixel 30 gehörenden Schwarzmaske 40 durchlässt. Diesen Wert erhält man dadurch, dass man das Filterpitch, also die Filterperiode $x_p$, durch die Anzahl der Subpixel 30 des Subpixelclusters eines Panels teilt. Hier sei wiederholt angemerkt, dass ein Panel 10 in Subpixelcluster zu einer Vielzahl von Subpixeln 30 unterteilt sein kann. Hinzu kommt aus Gründen der Displayhelligkeit sowie aus der Idee heraus, bei gegebenenfalls verbleibendem Moires die Linienamplitudenverhältnisse weiter zu beschränken ein Vergrößerungsfaktor. Der Vergrößerungsfaktor, der hauptsächlich bestimmt, wie viel von benachbarten Ansichten zusätzlich zur gewünschten Ansicht zu sehen sind, wird auch als Mixing- oder Mischungsfaktor m bezeichnet. Unter Berücksichtigung des Mischungsfaktors m ist das Filterpitch gegeben durch

$$x_b = x_p \cdot \frac{1}{n_{SUBPEL}} \cdot m$$

wobei $n_{SUPEL}$ die Anzahl der Subpixel 30 eine Subpixelclusters des Panels 10 sind und $x_p$ das Filterpitch ist. Der Mischungsfaktor m bewegt sich im Bereich 1 < m < 3, um nicht mehr als eine benachbarte Ansicht in Teilen in das wahrgenommene Bild zu mischen.

Stufige Filter, wie sie häufig verwendet werden, haben demgegenüber normalerweise den Vorteil einer geringfügig stärkeren Kanalseparation. Dieser Vorteil wird jedoch dadurch nahezu völlig zunichte gemacht, dass durch die hierbei implizit fehlende Kanalmischung das Moiré-Verhalten signifikant verschlechtert wird. Daher werden erfindungsgemäß die Filter in der Regel glatt in Form eines gekippten periodischen Streifenmusters, wie in den Figuren 3 und 4, gezeigt ausgeführt.

Das erfindungsgemäß vorgeschlagene autostereoskopische Display reduziert den Farbbeat- sowie den Blackbeat-Moiré gegenüber gebräuchlichen und bekannten autostereoskopischen Displays deutlich. Dies wird dadurch erreicht, dass der Skalierungsfaktor ν kleiner oder gleich 0,7, insbesondere gleich 0,66666, oder sogar kleiner oder gleich 0,5, insbesondere gleich 0,5 beträgt. Ein Filter mit einem solchen Skalierungsfaktor zeigt ein hervorragendes Filterverhalten in Bezug auf die Unterdrückung von Farb- und Blackbeat-Moiré-Effekten.

Da für die optophysikalischen Zusammenhänge zwischen dem Kippwinkel σ und dem Moiré-Effekt bisher keine geschlossene theoretisch-mathematische Beschreibung existiert, muss der ν-Wert beispielsweise empirisch mittels aufwändiger Versuchsanordnungen ermittelt werden. Erst diese Versuche ergeben die erfindungsgemäß optimierten Werte im Bereich von ν ≤ 0,7, bevorzugt aber im Bereich um den Wert 0,5.

Bei der Auslegung der erfindungsgemäßen Displayanordnung mit einem Barrierefilter für autostereoskopische Visualisierung ist eine Reihe von Parametern zu beachten. Der Augenabstand x' des Betrachters 60, der Abstand f' des Betrachters zum Display (optimaler Betrachterabstand) sowie dem Panel inhärente Daten (z. B. die Pixelstruktur der Pixelpitch x', wobei unter dem Pixelpitch der mittlere Abstand $\hat{x}$ zweier Pixel verstanden wird). Weiterhin sind geometrische Daten der Displayanordnung, sogenannte Basisparameter maßgebend. Solche Basisparameter sind im Wesentlichen der Filterpitch $x_p$, wobei als Filterpitch eine Filterperiode die sich aus einem opaken (optisch nicht durchlässigen) Bereich mit der horizontalen Breite $x_d$ und einem transparenten Bereich mit der horizontalen Breite $x_b$ zusammensetzt aus den gegebenen sowie den Basisparametern können weitere abgeleitete Parameter bestimmt werden. Derartige abgeleitete Parameter sind beispielsweise der Filterslant, der auch als Kippwinkel σ des Barrierefilters bezeichnet wird. Die Filterapertur (Spaltgröße), die Displayhelligkeit, der minimale sowie der maximale Betrachterabstand, sowie die seitliche Ausdehnung der Betrachtungszone im optimalen Betrachterabstand f'. Den typischen Aufbau eines Displays zeigt schematisch Figur 1 in der ein Ausschnitt eines Displaypanels 10 abgebildet ist. Ein Pixel oder ein Subpixel-Triplet 20 besteht gewöhnlich aus drei Subpixeln 30, jeweils aus einem grünen, einem blauen sowie einem roten Subpixel. Diese Subpixel 30 sind mittels einer Maske 40 (Blackmask) an einer ersten und einer zweiten Richtungsachse (11, 12) eines Rasters 50 auf geeignete Weise angeordnet. Aus den Subpixeln wird durch eine Ansteuervorrichtung Bildfolge, die ein für das Auge des Betrachters bewegliches Bild ergibt generiert.

Schließlich werden noch allgemeine mathematische Hintergründe zur Displayauslegung anhand besonderer Parameter erläutert, um ein Gesamtbild der für ein erfindungsgemäßes Display wesentlichen Einflussparameter zu vermitteln.

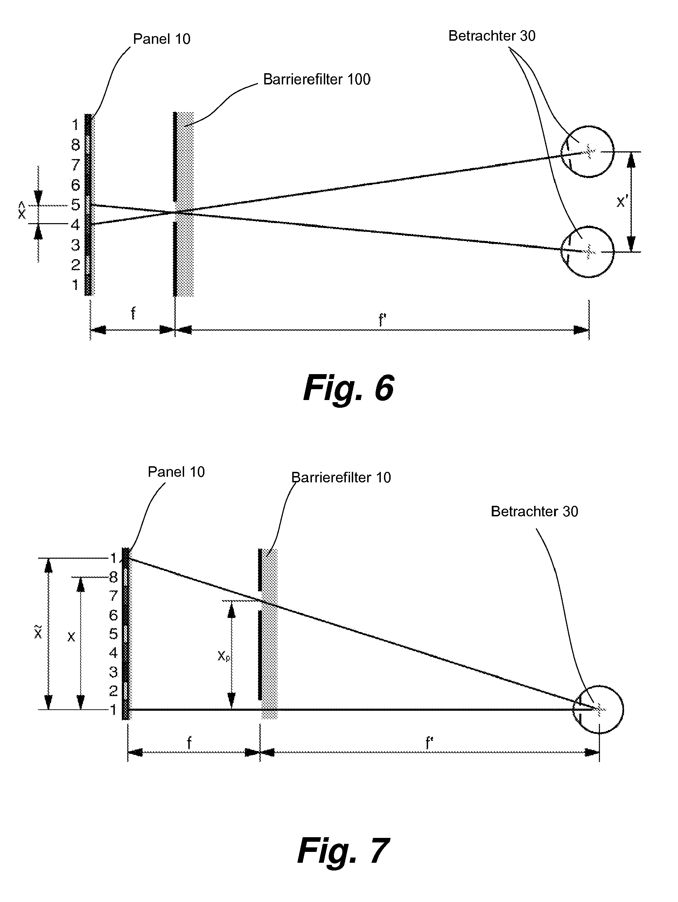

Anhand der Figur 6 wird die Berechnung der zu einem autostereoskopischen Display gehörenden Basisparameter, also im Wesentlichen durch die Displaygeometrie festgelegter Parameter, beschrieben. Wie aus Figur 6 ersichtlich, besteht zwischen den Augen des Betrachters 60 und der Displayanordnung als Panel 10 und Barrierefilter 100 ein einfacher strahlgeometrischer Zusammenhang, der die Berechnung des Abstandes f des Filters von der Oberfläche des Panels 10 ermöglicht. Demgemäß ist der Abstand f gegeben durch

$$\frac{\hat{x}}{f} = \frac{x'}{f'} \;=>\; f = f' \cdot \frac{\hat{f}}{x'}$$

Die Größen f' (gewünschter optimaler Betrachterabstand zum Barrierefilter 100), x' (mittlerer Augenabstand des Betrachters 60), und $\hat{x}$ (Subpixelpitch des verwendeten Panels bzw. mittlerer Subpixelabstand) sind durch den gewünschten Verwendungszweck des Panels, durch die Panelgeometrie selbst bzw. im Falle des Augenabstandes als statistischer Mittelwert x' = 62,5mm vorgegeben.

Die Figur 7 zeigt weiter die strahlgeometrischen Verhältnisse, zur Bestimmung der Filterpitch bzw. -periode $x_p$. Wie die Basisparameter, berechnet sich die Filterpitch $x_p$ aus einfachen strahlgeometrischen Zusammenhängen zu

$$\frac{\tilde{x}}{f + f'} = \frac{x_p}{f'} \;=>\; x_p = f' \cdot \frac{\tilde{x}}{f + f'} .$$

Hierbei sind f', f und x durch die vorherige Berechnung des Abstandes des Filters von der Paneloberfläche bekannt. Der Wert $\tilde{x}$ gibt die gewünschte Anzahl der Pixel 30 im Bild in Subpixelcluster an. Wenn die Anzahl der Subpixel 30 mit der Anzahl der dargestellten Bilder identisch ist (nicht zwingend erforderlich), so ergibt sich, wie in der einschlägigen Literatur dargestellt, $\tilde{x}$ als Produkt der Subpixelpitch $\hat{x}$ und der Anzahl der Views oder Bilder plus 1.

**Patentansprüche**

1. Displayanordnung mit einem optischen Barrierefilter (100) und einem Panel (10), die beabstandet zueinander angeordnet sind;

   wobei das Panel (10) eine Vielzahl von Subpixeln (30) aufweist, die in einem Raster (50) mit einer ersten und einer zweiten Richtungsachse (11, 12) angeordnet sind;

   wobei das Barrierefilter (100) ein periodisches Streifenmuster (70) mit einer Vielzahl von relativ zu der ersten Richtungsachse (11) des Panels (10) um einen Kippwinkel gekippten und zueinander beabstandeten Streifen (70) aufweist;

wobei der Kippwinkel gegeben ist durch:

$$\sigma = \arctan\left(\frac{x_{SPEL}}{y_{SPEL}} \cdot v\right)$$

wobei
σ den Kippwinkel,
ν einen Skalierungsfaktor,
$Y_{SPEL}$ eine Ausdehnung eines Subpixels (30) in der ersten Richtungsachse, und
$x_{SPEL}$ eine Ausdehnung eines Subpixels (30) in der zweiten Richtungsachse
bezeichnet; und
wobei der Skalierungsfaktor ν kleiner oder gleich 0,7 ist.

2.  Displayanordnung gemäß Anspruch 1, bei der der Skalierungsfaktor ν kleiner oder gleich 0,5 ist.

3.  Displayanordnung gemäß Anspruch 1 oder 2, bei der die Streifen (70) des Filters (100) optisch undurchlässig und bei der Freiräume (80) zwischen den beabstandeten Streifen (70) transparent sind.

4.  Displayanordnung gemäß einem der vorhergehenden Ansprüche, bei der die Streifen (70) äquidistant angeordnet sind.

5.  Displayanordnung gemäß einem der vorhergehenden Ansprüche, bei der die Subpixel (30) mittels einer Maske (40) an der ersten und an der zweiten Richtungsachse (11, 12) des Rasters (50) ausgerichtet sind.

Ausschnitt eines Panels 10

Subpixel-Triplet 20
(Pixel)

Subpixel 30

grün    blau    rot

Bildzeile 21

Schwarzmaske 40
(black mask)

erste Richtungsachse 11
des Panels

zweite Richtungsachse 12
des Panels

Raster 50

**Fig. 1**

DISPLAYANORDNUNG

Panel 10

Abstand f

Barrierefilter 100

Abstand f'

**BETRACHTER
60**

**Fig. 2**

Barrierefilter 100

opake Streifen 70

Freiräume 80
(Filterapertur)

Kippwinkel σ

erste Richtungsachse 11
des Panels

Ausschnitt eines Panels 10

# Fig. 3

erste Richtungsachse 11
des Panels

Barrierefilter 100

(opake) Streifen 70

Freiräume 80
(Filterapertur)

**(a)**

⊗

mögliche
Blickrichtung
in Zeichenebene

Schrägungs- **σ**
winkel

$X_p$

Barrierefilter 100

(opake) Streifen 70

Freiräume 80
(Filterapertur)

**(b)**

$X_b$

$X_d$

*Fig. 4*

Subpixel 30

Schrägungswinkel σ

$y_{SPEL}$

$x_{SPEL}$

# *Fig. 5*

**Fig. 6**

**Fig. 7**

Europäisches
Patentamt

European
Patent Office

Office européen
des brevets

**EUROPÄISCHER RECHERCHENBERICHT**

Nummer der Anmeldung

EP 10 18 9382

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 1 729 164 A1 (JAPAN SCIENCE & TECH AGENCY [JP]) 6. Dezember 2006 (2006-12-06) * Absatz [0009] - Absatz [0049] * * Absatz [0058] - Absatz [0079] * * Abbildungen 1-5 * | 1-5 | INV. G02B27/22 H04N13/00 |
| A | DE 10 2006 012059 B3 (FRAUNHOFER GES FORSCHUNG [DE]) 26. Oktober 2006 (2006-10-26) * Absatz [0007] - Absatz [0015] * * Abbildung 1 * | 1-5 | |
| A | WO 2010/070564 A1 (KONINKL PHILIPS ELECTRONICS NV [NL]; VAN DER HORST JAN [NL]; VAN DALFS) 24. Juni 2010 (2010-06-24) * Seite 2, Zeile 16 - Seite 4, Zeile 26 * * Seite 5, Zeile 21 - Seite 12, Zeile 30 * * Abbildungen 1, 3 * | 1-5 | |
| A | US 2008/079662 A1 (SAISHU TATSUO [JP] ET AL) 3. April 2008 (2008-04-03) * Absatz [0010] - Absatz [0036] * * Abbildungen 1, 9-11 * | 1-5 | RECHERCHIERTE SACHGEBIETE (IPC) G02B H04N |
| A | EP 0 791 847 A1 (PHILIPS ELECTRONICS NV [NL] KONINKL PHILIPS ELECTRONICS NV [NL]) 27. August 1997 (1997-08-27) * Spalte 2, Zeile 29 - Spalte 5, Zeile 22 * * Abbildungen 1-3 * | 1-5 | |
| A | US 2010/046069 A1 (OTTE STEPHAN [DE] ET AL) 25. Februar 2010 (2010-02-25) * Absatz [0016] - Absatz [0040] * * Abbildungen 1-6 * | 1-5 | |

-/--

Der vorliegende Recherchenbericht wurde für alle Patentansprüche erstellt

| Recherchenort | Abschlußdatum der Recherche | Prüfer |
|---|---|---|
| Den Haag | 26. Mai 2011 | Szachowicz, Marta |

KATEGORIE DER GENANNTEN DOKUMENTE

X : von besonderer Bedeutung allein betrachtet
Y : von besonderer Bedeutung in Verbindung mit einer
   anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
   nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes
   Dokument

EPO FORM 1503 03.82 (P04C03)

**Europäisches Patentamt**
**European Patent Office**
**Office européen des brevets**

## EUROPÄISCHER RECHERCHENBERICHT

Nummer der Anmeldung

EP 10 18 9382

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | WO 2009/036758 A1 (VISUMOTION GMBH [DE]; OTTE STEPHAN [DE]; KLIPPSTEIN MARKUS [DE]) 26. März 2009 (2009-03-26) * Absatz [0014] - Absatz [0043] * * Absatz [0054] - Absatz [0102] * * Abbildungen 1-7 * ----- | 1-5 | |

RECHERCHIERTE SACHGEBIETE (IPC)

Der vorliegende Recherchenbericht wurde für alle Patentansprüche erstellt

| Recherchenort | Abschlußdatum der Recherche | Prüfer |
|---|---|---|
| Den Haag | 26. Mai 2011 | Szachowicz, Marta |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
..............................................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**                   EP 10 18 9382

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

26-05-2011

| Im Recherchenbericht angeführtes Patentdokument | Datum der Veröffentlichung | Mitglied(er) der Patentfamilie | Datum der Veröffentlichung |
|---|---|---|---|
| EP 1729164 A1 | 06-12-2006 | JP 3885077 B2<br>JP 2005309374 A<br>WO 2005093494 A1<br>KR 20060126833 A<br>US 2007188517 A1 | 21-02-2007<br>04-11-2005<br>06-10-2005<br>08-12-2006<br>16-08-2007 |
| DE 102006012059 B3 | 26-10-2006 | KEINE | |
| WO 2010070564 A1 | 24-06-2010 | KEINE | |
| US 2008079662 A1 | 03-04-2008 | JP 4197716 B2<br>JP 2008092361 A<br>KR 20080031129 A | 17-12-2008<br>17-04-2008<br>08-04-2008 |
| EP 0791847 A1 | 27-08-1997 | DE 69718534 D1<br>DE 69718534 T2<br>JP 3940456 B2<br>JP 9236777 A<br>JP 4253345 B2<br>JP 2007188097 A<br>US 6064424 A | 27-02-2003<br>06-11-2003<br>04-07-2007<br>09-09-1997<br>08-04-2009<br>26-07-2007<br>16-05-2000 |
| US 2010046069 A1 | 25-02-2010 | CN 101803393 A<br>WO 2008122256 A1<br>DE 102007016773 A1<br>EP 2143282 A1<br>JP 2010524309 T | 11-08-2010<br>16-10-2008<br>09-10-2008<br>13-01-2010<br>15-07-2010 |
| WO 2009036758 A1 | 26-03-2009 | CN 101836459 A<br>DE 102007045385 B3<br>JP 2010539546 T<br>US 2010238275 A1 | 15-09-2010<br>23-04-2009<br>16-12-2010<br>23-09-2010 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- GB 190418672 A
- JP 8331605A A

- WO 2004077839 A1

**In der Beschreibung aufgeführte Nicht-Patentliteratur**

- **SAM H. KAPLAN.** Theory of Parallax Barriers. *SMP-TI,* Juli 1952, vol. 59 (7), 11-21